# FASCICULE DE BREVET EUROPEEN

(11) **EP 2 213 988 B1**
(45) Date de publication et mention de la délivrance du brevet: **20.06.2012**
(21) Numéro de dépôt: 09305085.4
(22) Date de dépôt: 30.01.2009
(51) Int. Cl.: G01D 5/347

(54) **Système pour la mesure d'un corps en mouvement à capteur optique de position**
System zum Messen eines Körpers in Bewegung mit Hilfe eines optischen Positionssensors
System for measuring a moving body with an optical position sensor

(43) Date de publication de la demande: 04.08.2010
(73) Titulaire: Delphi Technologies, Inc., Troy, MI 48007 (US)
(72) Inventeur: Geyl, Laurent, 67400 ILLKIRCH (FR); Tupinier, Laurent, 67116, REICHSTETT (FR)
(74) Mandataire: Robert, Vincent

(56) Documents cités:
- EP-A- 1 475 613
- US-A1- 2005 128 594

## Description

La présente invention concerne un système optique pour la mesure de la position d'un corps en mouvement, permettant de mettre en oeuvre des mesures rapides et précises dans différentes applications.

Le problème que se propose à titre principal de résoudre l'invention est par conséquent le codage à une vitesse et avec une précision élevées de la position d'un corps en mouvement, dans le cadre d'un système optique doté à titre essentiel d'au moins une source de lumière émettant un faisceau de lumière cohérente destiné à interférer avec un codeur optique diffractif solidaire dudit corps en mouvement, et d'au moins un dispositif de détection du signal diffracté.

Plus précisément, le codeur comporte une succession de cellules de codage munies de réseaux ou motifs diffractifs, en général des hologrammes générés par ordinateurs (CGH pour computer generated holograms), correspondant à des codes définissant chacun un emplacement unique sur le codeur, et donc sur le corps en mouvement. Ces cellules interfèrent successivement avec le faisceau de lumière au cours de leur déplacement relatif, et le signal diffracté obtenu est envoyé vers le dispositif de détection en vue de la mesure de la position absolue du corps en mouvement.

L'utilisation de réseaux ou motifs diffractifs pour le codage absolu de la position d'un organe en mouvement par rapport à un autre est connue. Par ailleurs de US 2005/0128594 est connue l'utilisation de réseaux diffractifs pour le codage du déplacement d'un corps en mouvement par rapport à un autre. Une telle configuration est par exemple appliquée à des capteurs angulaires, permettant par conséquent la mesure de la position angulaire d'un élément rotatif par rapport à un système fixe. En prenant l'exemple de l'industrie automobile, les applications de telles mesures dans les véhicules sont multiples. On peut citer l'utilisation d'une information angulaire dans des dispositifs sécuritaires de type ESP, dont le fonctionnement est basé sur la mesure permanente de l'angle du volant de direction du véhicule. Les mesures répétées doivent être précises pour que la fonction sécuritaire soit garantie.

L'avènement proche des mécanismes de direction filo-commandés nécessitera a fortiori des mesures d'angles précises, rapides et fiables, notamment au niveau du volant. D'une manière générale, les mesures de déplacements relatifs de deux composants seront au coeur des véhicules de demain, du fait de la généralisation des organes de manoeuvre et des capteurs sans contacts.

Les technologies actuellement mises en oeuvre, en général magnétiques (avec deux codeurs magnétiques) ou basées sur des capteurs optiques sérigraphiés (disques procédant par « ombrage »), permettent des mesures angulaires d'une résolution de l'ordre de 0,1 ° et d'une précision d'environ 0,5°, pour un temps de réponse qui se situe entre quelques centaines de microsecondes et quelques millisecondes. C'est notoirement insuffisant pour nombre de technologies arrivant à maturité dans ce domaine.

Le système de l'invention remédie à ces insuffisances, en proposant une solution qui permet d'accroître dans des proportions importantes la résolution, la précision et la rapidité des mesures, d'une manière au surplus simple et économiquement peu onéreuse à la fabrication.

A cet effet, ledit système, comportant classiquement :
- une source de lumière émettant un faisceau cohérent spatialement et temporellement, de type laser ;
- un codeur optique diffractif solidaire du corps en mouvement, comportant une succession de cellules de codage dotées d'au moins un réseau diffractif et positionnées en vue d'interférer avec le faisceau, chaque cellule générant par modulation de phase une tache lumineuse mobile à mesure qu'elle est balayée par le faisceau ;
- un dispositif de détection de la position de la tache mobile formant le signal issu du codeur optique;
se caractérise à titre principal en ce que :
- le dispositif de détection de la position de la tache mobile est un capteur optique de position bidimensionnel attribuant à la tache lumineuse deux coordonnées x et y selon deux axes perpendiculaires ;
- le ou les réseau(x) diffractif(s) présent(s) dans chaque cellule déplace(nt) la tache dans un seul sens en balayant la dimension x pour une valeur de y fixe par cellule du codeur, de manière à établir une matrice des valeurs (x₁y₁... xₙyₙ) prises par la tache lors du mouvement associant bijectivement une position détectée à une position du faisceau par rapport au codeur, les colonnes étant définies par les valeur de x et les lignes par les valeurs de y.

La solution aux problèmes résolus par l'invention consiste en l'espèce à utiliser un potentiomètre optique utilisé comme détecteur de position, qui fournit les coordonnées d'un point théorique défini par (x,y) et correspondant au point d'impact du faisceau mobile diffracté. Chaque point peut être associé bijectivement non seulement à une cellule de codage du codeur, mais encore à un « découpage » de celle-ci dans la direction de déplacement du corps en mouvement, relativement au faisceau lumineux. Il suffit alors d'une table de correspondance préétablie pour obtenir très rapidement, et avec une précision qui dépend du nombre de points qu'autorise le détecteur dans la dimension x et de sa résolution, la position par exemple angulaire dudit corps.

En substance, le traitement électronique est réduit à la mise en correspondance dans une table d'un élément d'une matrice avec un positionnement prédéterminé, d'où une quasi immédiateté dans l'obtention du résultat. L'utilisation combinée d'un codeur optique diffractif et d'un détecteur optique de position, composants bien connus et à présent très communs, conduit au surplus à une solution économiquement intéressante car peu onéreuse à fabriquer.

Plus précisément, de préférence, les réseaux diffractifs des cellules de codage successives entrainent un balayage du capteur optique de position par la tache lumineuse faisant alterner une ligne yᵢ dans un sens (x₁ à xₙ) et la ligne suivante yᵢ₊₁ dans l'autre sens (xₙ à x₁). Le balayage du dispositif de détection est alors optimisé, dans le temps comme dans l'espace.

Selon une configuration possible, le codeur est revêtu de réseaux diffractifs bidimensionnels sur ses deux faces opposées traversées par le rayon lumineux, le premier formant un réseau diffractif générant au moins pour le signal lumineux diffracté du premier ordre un angle propre à chaque cellule et lui permettant de se positionner sur une ligne yᵢ du capteur optique de position correspondant à une unique cellule, et le second formant un réseau diffractif répété sur chaque cellule et générant un balayage des colonnes (xᵢ à xₙ) pour chaque ligne yᵢ.

Le rayon lumineux est donc d'abord dévié, d'un angle à la fois constant sur toute la cellule de codage et qui dépend de ladite cellule, en vue de son positionnement sur une ligne unique, suivant la coordonnée yᵢ. Puis, le second réseau diffractif, placé sur la seconde face traversée par le faisceau, dirige le rayon sur les cellules de détection (x₁ à xₙ) ou l'inverse à mesure du déplacement relatif du faisceau incident et de la cellule de codage au cours du mouvement.

Additionnellement, il est possible que le signal diffracté d'ordre 0 soit émis en direction d'un second capteur optique de position à des fins de calibration et de compensation.

Comme déjà mentionné, le système de l'invention peut en particulier être appliqué à des capteurs d'angle, le codeur étant dans ce cas par exemple un disque solidaire d'un arbre rotatif. Celui-ci peut, selon une configuration également mentionnée, être l'arbre rotatif qui commande la direction d'un véhicule.

L'invention va à présent être décrite plus en détail, en référence aux figures annexées, pour lesquelles :
- la figure 1 est une vue schématique d'un système optique selon la présente invention ;
- la figure 2 montre le déplacement du signal diffracté sur le capteur optique de position correspondant à quatre positions relatives du faisceau incident et du codeur, sur deux cellules de codage de ce dernier ; et
- la figure 3 représente un exemple de double réseau de diffraction revêtant les deux faces d'un codeur, lequel est utilisé avec deux capteurs optiques de position.

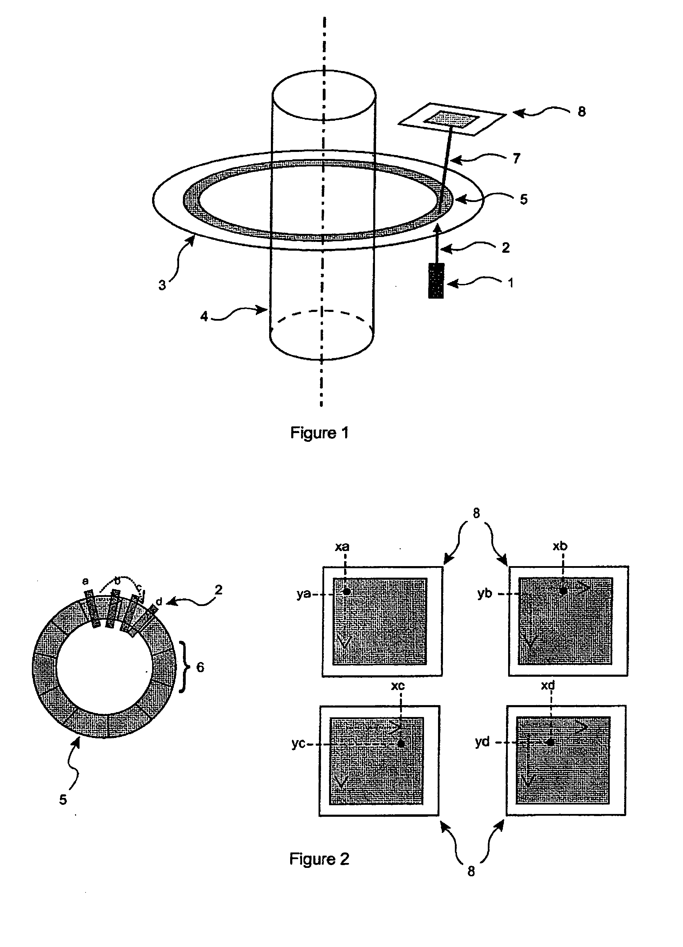

En référence à la figure 1, la source de lumière (1), en l'espèce une source cohérente (diode laser, S-LED associée à un filtre fréquentiel, RC-LED à cohérence spatiale améliorée), émet un faisceau lumineux (2) de lumière à destination d'un codeur (3) solidaire d'un élément en rotation (4), par exemple une colonne de direction dont on veut connaître la position angulaire.

Le codeur (3) est un disque qui comporte sur une piste annulaire (5) une succession continue de cellules de codage (6) (voir en figure 2) contenant des hologrammes diffractifs, en sortie desquelles un signal lumineux (7) diffracté sous forme d'une tache lumineuse mobile est envoyé à destination d'un capteur optique de détection (8).

Selon l'invention, le faisceau de lumière (2), animé d'un mouvement de rotation relativement au codeur (3) et donc à la piste annulaire (5) constituée de cellules (6) placées l'une à la suite de l'autre, balaye pour chaque cellule i l'ensemble des points de coordonnées (x₁ à xₙ, yᵢ). Ainsi, en prenant comme exemple 4 positions a, b, c et d situés dans deux cellules adjacentes comme montré en figure 2, yₐ et y_{b} sont égales et, de même, y_{c} et y_{d} sont égales.

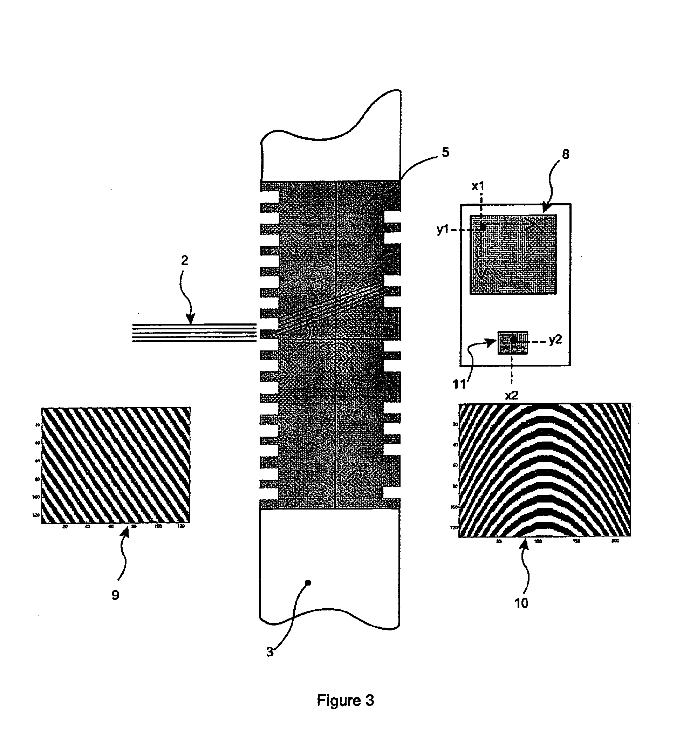

La figure 3 montre un exemple de réseaux diffractifs permettant d'aboutir à ce résultat. Dans l'hypothèse représentée, la piste annulaire (5) du support (3) comporte un encodage sur deux niveaux avec un premier réseau diffractif (9) sur lequel s'applique le faisceau incident (2), qui diffracte ledit rayon en modifiant sa direction d'un angle θ constant dans chaque cellule (6), qui fixe la coordonnée y, et un second réseau (10) qui déplace le spot le long de l'axe des x du capteur optique (8). Une configuration sur plusieurs niveaux, augmentant l'efficacité de diffraction et donc le rendement énergétique du système, peut aussi être envisagée. Dans un souci de facilité d'industrialisation, les profils de phase (9) et (10) peuvent être fusionnés en un seul et encodés sur plusieurs niveaux, typiquement au nombre de 8.

Un second capteur optique de détection (11) est disposé pour le signal central d'ordre 0, à des fins de calibration et de compensation. La position absolue du spot sur le détecteur (8) et de celui sur le détecteur (11) est affectée de façon similaire par les tolérances mécaniques du système ainsi que par les contraintes environnementales tel que la température ou les vibrations. L'emploi du détecteur (11) et du détecteur (8) permet de mesurer le positionnement relatif du spot résultant de la diffraction sur le détecteur (8) par rapport au spot issu de l'ordre central impactant le détecteur (11). Cette mesure s'affranchit donc des perturbations citées précédemment et affectant les deux spots permettant de ce fait une calibration initiale fiable ainsi qu'une mesure robuste en accord avec les contraintes sévères de l'application, notamment celles propres au domaine automobile.

La matrice constituée du capteur principal de détection a au moins n lignes, n correspondant au nombre de cellules de détection disposées sur la piste annulaire (5), et à l'ordonnée de chaque point. Elle comporte ensuite au moins d/r colonnes, r étant la résolution du capteur (8) et d l'amplitude du déplacement du spot lumineux dans la direction des abscisses x. La résolution du capteur est alors, en prenant l'exemple d'un capteur d'angle tel que représenté en figure 1, Rc = 360/(N*d/r).

En prenant par exemple un capteur optique de position existant dont la surface active est de 9 mm x 9 mm, dont on utilise 80%, doté d'une résolution de 1,5 µm et d'une précision de ±150 µm, si le nombre de cellules de détection est N = 24, on obtient une résolution de 0,0031 ° et une précision maximale de 0,31 °. Ces valeurs sont bien meilleures que tout ce que l'on peut obtenir avec les systèmes actuels, et il est en plus parfaitement possible de les obtenir en quelques µs.

Les exemples de configuration apparaissant dans les figures ne sont indiqués qu'à titre informatif, et ne limitent pas la portée du présent droit, l'invention englobant les variantes structurelles à la portée de l'homme de l'art.

## Revendications

1. Système optique pour la lecture de la position d'un corps en mouvement, comportant :
- une source de lumière (1) émettant un faisceau (2) cohérent spatialement et temporellement, de type laser ;
- un codeur optique (3) diffractif solidaire du corps (4) en mouvement, comportant une succession de cellules de codage (6) dotées d'au moins un réseau diffractif (9, 10) et positionnées en vue d'interférer avec le faisceau (2), chaque cellule (6) générant par modulation de phase une tache lumineuse mobile à mesure qu'elle est balayée par le faisceau ;
- un dispositif de détection (8) de la position de la tache mobile formant le signal (7) issu du codeur optique (3) ;
**caractérisé en ce que** :
- le dispositif de détection de la position de la tache mobile est un capteur optique de position (8) bidimensionnel attribuant à la tache lumineuse deux coordonnées x et y selon deux axes perpendiculaires;
- le ou les réseau(x) diffractif(s) (9, 10) présent(s) dans chaque cellule déplace(nt) la tache dans un seul sens en balayant la dimension x pour une valeur de y fixe par cellule (6) du codeur (3), de manière à établir une matrice des valeurs (x₁y₁... xₙyₙ) prises par la tache lors du mouvement associant bijectivement une position détectée à une position du faisceau (2) par rapport au codeur (3), les colonnes étant définies par les valeur de x et les lignes par les valeurs de y.

2. Système optique selon la revendication précédente, **caractérisé en ce que** les réseaux diffractifs (9, 10) des cellules de codage successives entrainent un balayage du capteur optique de position (8) par la tache lumineuse faisant alterner une ligne yᵢ dans un sens (x₁ à xₙ) et la ligne suivante yᵢ₊₁ dans l'autre sens (xₙ à x₁).

3. Système optique selon l'une des revendications précédentes, **caractérisé en ce que** le codeur (3) est revêtu de réseaux diffractifs (9, 10) bidimensionnels sur ses deux faces opposées traversées par le rayon lumineux, le premier formant un réseau diffractif (9) générant au moins pour le signal lumineux diffracté du premier ordre un angle propre à chaque cellule (6) et lui permettant de se positionner sur une ligne yᵢ du capteur optique de position correspondant à une unique cellule, et le second formant un réseau diffractif (10) répété sur chaque cellule et générant un balayage des colonnes (x₁ à xₙ) pour chaque ligne yᵢ.

4. Système optique selon l'une quelconque des revendications précédentes, **caractérisé en ce que** le signal diffracté d'ordre 0 est émis en direction d'un second capteur optique de position (11) à des fins de calibration et de compensation.

5. Système optique selon l'une quelconque des revendications précédentes, **caractérisé en ce qu'**il est appliqué à des capteurs d'angle, le codeur étant un disque (3) solidaire d'un arbre rotatif (4).

6. Système optique selon la revendication précédente, **caractérisé en ce que** l'arbre rotatif commande la direction d'un véhicule.

## Claims

1. Optical system for reading the position of a moving body, comprising:
- a light source (1) emitting a spatially and temporally coherent beam (2), of the laser type;
- a diffractive optical coder (3) integral with the moving body (4), comprising a succession of coding cells (6) provided with at least one diffractive network (9, 10) and positioned for the purpose of interfering with the beam (2), each cell (6) generating by phase modulation a moving light spot as it is swept by the beam;
- a device (8) for detecting the position of the moving spot forming the signal (7) derived from the optical coder (3);
**characterised in that**:
- the device for detecting the position of the moving spot is a two-dimensional optical position sensor (8) attributing two coordinates x and y along two perpendicular axes to the light spot;
- the diffractive network or networks (9, 10) present in each cell displace the spot in one direction by sweeping the dimension x for one fixed value of y per cell (6) of the coder (3), so as to establish a matrix of values (x₁y₁...xₙyₙ) adopted by the spots during the movement bijectively associating a detected position with a position of the beam (2) relative to the coder (3), the columns being defined by the x values and the rows by the y values.

2. Optical system according to the preceding claim, **characterised in that** the diffractive networks (9, 10) of the successive coding cells give rise to sweeping of the optical position sensor (8) by the light spot alternating one row yᵢ in one direction (x₁ to xₙ) and the next row yᵢ₊₁ in the other direction (xₙ to x₁).

3. Optical system according to one of the preceding claims, **characterised in that** the coder (3) is covered with two-dimensional diffractive networks (9, 10) on its two opposite faces traversed by the light beam, the first forming a diffractive network (9) generating at least for the primary diffracted light signal an angle peculiar to each cell (6) and allowing it to be positioned on a row yᵢ of the optical position sensor corresponding to a single cell, and the second forming a diffractive network (10) repeated on each cell and generating a sweep of the columns (x₁ to xₙ) for each row yᵢ.

4. Optical system according to any of the preceding claims, **characterised in that** the zero-order diffracted cell is emitted in the direction of a second optical position sensor (11) for purposes of calibration and compensation.

5. Optical system according to any of the preceding claims, **characterised in that** it is applied to angle sensors, the coder being a disc (3) integral with a rotating shaft (4).

6. Optical system according to the preceding claim, **characterised in that** the rotating shaft controls the steering of a vehicle.

## Patentansprüche

1. Optisches System zum Einlesen der Position eines Körpers in Bewegung, enthaltend:
- eine Lichtquelle (1), die eine räumlich und zeitlich kohärente Strahlung (2) ausgibt;
- einen optischen Diffraktionscodierer (3), der fest mit dem Körper (4) in Bewegung verbunden ist und eine Aufeinanderfolge von Codierungszellen (6) aufweist, die mit zumindest einem Beugungsgitter (9, 10) ausgestattet und dazu vorgesehen sind, mit der Strahlung (2) zu interferieren, wobei jede Zelle (6) einen Lichtfleck durch Phasenmodulation erzeugt, der je nach Abtastung der Zelle durch die Strahlung beweglich ist;
- eine Erfassungsvorrichtung (8) zum Erfassen der Position des beweglichen Lichtflecks, die das vom optischen Codierer (3) abgehende Signal (7) erzeugt,
**dadurch gekennzeichnet, dass**
die Erfassungsvorrichtung zum Erfassen der Position des beweglichen Lichtflecks ein zweidimensionaler optischer Positionssensor (8) ist, welcher dem Lichtfleck zwei Koordinaten, x und y, auf zwei senkrecht verlaufenden Achsen zuordnet;
das bzw. die in jeder Zelle vorhandene(n) Beugungsgitter (9, 10) den Lichtfleck in einer einzigen Richtung verlagern, indem die x-Dimension bei einem festen y-Wert pro Zelle (6) des Codierers (3) abgetastet wird, so dass eine Matrix der Werte (x1y1 ... xnyn) erstellt wird, die von dem Lichtfleck bei der Bewegung aufgenommen werden, mit welcher eine erfasste Position bijektiv einer Position der Strahlung (2) bezüglich des Codierers (3) zugeordnet wird, wobei die Spalten von den x-Werten und die Zeilen von den y-Werten bestimmt werden.

2. Optisches System nach dem vorangehenden Anspruch, **dadurch gekennzeichnet, dass** die Beugungsgitter (9, 10) der aufeinanderfolgenden Codierungszellen eine Abtastung des optischen Positionssensors (8) durch den Lichtfleck bewirken, wodurch sich eine Zeile yᵢ in einer Richtung (x₁ bis xₙ) und die nachfolgende Zeile yᵢ₊₁ in der anderen Richtung (xₙ bis x₁) abwechseln.

3. Optisches System nach einem der vorangehenden Ansprüche, **dadurch gekennzeichnet, dass** der Codierer (3) an seinen beiden entgegengesetzten Seiten, durch welche der Lichtstrahl tritt, mit zweidimensionalen Beugungsgittern (9, 10) belegt ist, wobei das erste ein Beugungsgitter (9) bildet, das zumindest bei dem gebeugten Lichtsignal erster Ordnung einen Winkel erzeugt, der jeder Zelle (6) zu eigen ist und dieser gestattet, sich auf eine Zeile yᵢ des optischen Positionssensors zu positionieren, die einer einzelnen Zelle entspricht, und wobei das zweite ein Beugungsgitter (10) bildet, das an jeder Zelle wiederholt wird und eine Abtastung der Spalten (x₁ bis xₙ) bei jeder Zeile yᵢ bewirkt.

4. Optisches System nach einem der vorangehenden Ansprüche, **dadurch gekennzeichnet, dass** das gebeugte Signal der Ordnung 0 in Richtung eines zweiten optischen Positionssensors (11) zwecks Kalibrierung und Kompensation ausgegeben wird.

5. Optisches System nach einem der vorangehenden Ansprüche, **dadurch gekennzeichnet, dass** es bei Winkelsensoren Anwendung findet, wobei der Codierer eine fest mit einer rotierenden Welle (4) verbundene Scheibe (3) ist.

6. Optisches System nach dem vorangehenden Anspruch, **dadurch gekennzeichnet, dass** die rotierende Welle die Lenkung eines Fahrzeugs steuert.
